# EUROPEAN PATENT APPLICATION

(11) **EP 1 964 472 A1**
(43) Date of publication of application: **03.09.2008**
(21) Application number: 08002003.5
(22) Date of filing: 04.02.2008
(51) Int. Cl.: A21D 2/08, A21D 8/02, A21D 8/04, A21D 10/00, A21D 13/00

(54) **Bakery food product and process for the preparation thereof**

(30) Priority: 08.02.2007 IT mi20070229
(71) Applicant: G.M. Piccoli S.r.l., 24022 Alzano Lombardo (BG) (IT)
(72) Inventor: Piccoli, Mauro, 24022 Alzano Lombardo BG (IT)
(74) Representative: Trupiano, Federica

(57) **Abstract**

Single serving bakery food product, comprising a laminated dough base chosen from puff pastry, semi puff pastry and leavened puff or semi puff pastry (laminated leavened dough) and at least one filling of leavening dough, optionally accompanied by one or more additional fillings, for example based on jam, fruit compote, vanilla cream, chocolate cream, hazelnut cream and the like.

## Description

### SUBJECT MATTER OF THE INVENTION

The present invention relates to a bakery food product and a process for the preparation thereof.

### STATE OF THE ART

The bakery food product sector is expanding significantly and has always been of considerable interest for industries operating in the food sector. In particular, there is considerable interest in bakery food products, mainly produced for consumption at breakfast, such as brioches, croissants and the like.

Normally, these products are produced with a puff or semi-puff pastry, according to the quantity of butter or margarine used to prepare the dough base. These food products are very often provided with a filling, based on jam, fruit compote, vanilla cream, chocolate cream, hazelnut cream and the like. The process to prepare these products entails preparing the puff or semi-puff pastry forming the basis of the product, placing the filling inside the dough and folding or laying the puff (or semi-puff) pastry over the filling, if necessary cutting the individual pieces, to obtain a product having the desired shape. In the case of conventional croissants, for example, the dough will be cut and folded (rolled) over the filling to obtain the characteristic "croissant" shape.

The bakery products thus obtained can be baked directly and subsequently packaged or sent for immediate consumption, or they can be frozen unbaked to be baked subsequently. Alternatively, the product can be part-baked and frozen, to undergo final baking subsequently, at the time of consumption.

The common limit of these bakery products, in particular in the case of products with a filling, is given by the fact that during baking the filling tends to partly evaporate, and in any case to decrease in quantity, to a greater or lesser degree according to its characteristics, with respect to the initial quantity provided unbaked. Consequently, in the baked product ready for consumption or packaging, a product is obtained in which the puff (or semi-puff) pastry has significantly expanded, while the partly evaporated filling has decreased considerably, leaving a hollow area of greater or lesser size depending on the type of filling. This empty area, which at times can also cause a variation in the general appearance of the product after baking, in any case leaves the consumer, who often finds a quantity of filling much lower than his or her expectations, feeling disappointed.

To overcome this drawback, it is possible to add the filling after baking, so as to dose the filling precisely in relation to the size of the finished product to be consumed and therefore so that the filling does not undergo decreases in volume during baking thereof. However, although offering good results, this system of filling after baking can only be performed by those with suitable equipment and, above all, by those with specific authorization to add unbaked fillings.

Another characteristic drawback of "conventional" products is represented by the fact that, if consumed a certain amount of time after baking, i.e. 12-24 hours, the product has modified organoleptic characteristics, caused for example by the increased level of humidity of the dough, which thus loses its crispiness.

A similar problem occurs in the case of bakery products based on "beaten dough" such as muffins, plum cakes, sponge cakes rather than puff or semi-puff pastry. In this case, even if the type of finished product after baking is different, fillings of various types are often provided, which must be added to the dough before baking. Owing to its somewhat liquid consistency, this "beaten dough" requires to be poured into paper or aluminium moulds - baking cups before being baked. The result after baking (if compared to products based on puff or semi-puff pastry) does not meet with the widespread approval of consumers as the product is somewhat dry, as it must be baked "open" and moreover, although due to its different nature compared with puff pastry products it does not have a hollow area inside, it still has insufficient filling. If a greater quantity of filling is required, this too would need to be added after baking, with the same problems mentioned above.

Therefore, there is the problem of producing and providing bakery food products, based on puff or semi-puff pastry, leavened if necessary, which are provided with a filling added to the unbaked product during preparation thereof, and which remains constant during baking and does not undergo evaporation or reduction in volume/weight leading to the creation of undesirable hollow areas inside the baked product to be consumed.

### OBJECTS OF THE INVENTION

The object of the present invention is to provide a bakery food product composed of a laminated dough and of at least one filling which after baking does not have hollow areas caused by reduction/evaporation of the filling.

Another object of the present invention is to provide a bakery food product composed of a laminated dough and of at least one filling which does not require the filling to be added after the product has been baked.

Yet another object of the present invention is to provide a bakery food product that is flavoursome, rich and after baking retains the organoleptic properties of its main ingredients.

A further object of the present invention is to provide a process for the preparation of a bakery food product composed of a laminated dough and of at least one filling.

### DESCRIPTION

These and yet other objects and relative advantages which will be more apparent from the description below, are achieved by a bakery food product comprising a laminated dough base and at least one filling of leavening dough. According to the present invention, said bakery food product is a single serving product, wherein said laminated dough is chosen from puff pastry, semi-puff pastry and leavened puff or semi-puff pastry (leavened dough), while said leavening dough can be accompanied by one or more additional fillings, for example based on jam, fruit compote, vanilla cream, chocolate cream, hazelnut cream and the like. In particular, the laminated dough base constitutes between 40% and 90% in weight of the finished unbaked product, while the leavening dough constitutes between 10% and 60% in weight of the finished unbaked product. More in particular, the laminated dough base constitutes between 50% and 85% in weight of the finished unbaked product, while the leavening dough constitutes between 15% and 50% in weight of the finished unbaked product.

According to the present invention, laminated dough is intended as a puff pastry, with a content of butter or margarine ranging from 30% to 60%, or a semi-puff pastry, with a butter or margarine content ranging from 10% to 30%. Yeast can be added to both the aforesaid puff and semi-puff pastries, and in this case they are defined in the present description as laminated leavened pastries.

Always according to the invention, leavening dough is intended as a unlaminated leavening dough.

The product according to the finding can advantageously be additionally filled with a conventional filling, for example based on jam, fruit compote, vanilla cream, chocolate cream, hazelnut cream and the like. In this case, these types of filling will accompany the filling based on leavening dough, and both the fillings will be enclosed or generically combined with the laminated dough forming the base of the product according to the invention.

If an additional filling based on jam, cream or the like is provided, the ratio between the main components of the bakery product according to the invention can advantageously be as indicated below:

| | |
|---|---|
| laminated dough | 30-70% in weight of the finished unbaked product |
| filling based on leavening dough | 10-40% in weight of the finished unbaked product |
| filling based on jam, cream | 5-30% in weight of the finished unbaked product. |

The relative proportions between components, for example in the case of a product based on laminated dough comprising a filling based on leavening dough and an additional filling based on jam or cream, can be such that the quantity of leavening dough is comprised between 10% and 50% in weight in relation to the quantity of laminated dough, while the quantity of filling based on jam or cream is comprised between 10% and 60% in weight in relation to the quantity of laminated dough. The bakery product according to the present invention is a single serving product, which is prepared and frozen unbaked. At the time of consumption, it advantageously undergoes complete baking, providing a product having numerous advantages with respect to similar products according to prior art. Again according to the invention, the aforesaid bakery product can also be baked directly for subsequent preservation or for direct consumption.

The presence of a filling based on leavening dough makes the filling of the laminated dough very voluminous and rich and thereby prevents undesirable hollows from forming during baking. In fact, during baking, the leavening dough distend and fills the shell of laminated dough (typically puff or semi-puff pastry) that encloses it, thereby preventing undesirable hollow areas from forming inside the baked product. Moreover, the presence of the leavening dough as filling allows an additional filling based on jam, cream, fruit compote or the like to be associated. In this case, the additional filling will not undergo evaporation and reduction during baking as it is surrounded by and immersed in the filling based on leavening dough, which allows the correct level of humidity to be retained and avoids or considerably reduces dehydration and the consequent decrease in volume. Any additional filling thus remains soft and pleasing to the palate, retaining all the organoleptic properties without requiring to be added subsequently to the baked product.

The ratios between laminated dough and filling based on leavening dough according to the invention are particularly significant, as they allow a bakery product to be produced characterized by an outer shell or base in laminated dough, flavoursome and rich and which can even be relatively thin, even around 2 mm thick, without losing the positive organoleptic properties of the product. At the same time, although produced with a smaller quantity of laminated dough, the product is characterized by a rich filling, with significant characteristics of softness and volume. Moreover, any additional filling based on creams or jams retains its initial volume and maintains, even after baking, its principal organoleptic properties.

Following baking, the bakery product according to the invention has a particularly inviting appearance as it is swollen; moreover, the leavening dough added as filling inside the laminated dough oozes slightly from the cuts or from any openings of different shapes that can be present on the surface of the product, giving it a rich appearance.

Moreover, even 12-24 hours after baking, the bakery product according to the invention retains part of its initial characteristics of fragrance and crispiness, due to the combination of outer puff (or semi-puff) pastry and filling based on leavening dough. This combination in fact compensates for the fact that the outer dough can absorb too much humidity after baking and thus be less tempting due, for example, to a decrease in crispiness. Even in conditions of high humidity during preservation thereof after baking, the product according to the invention retains good organoleptic properties and is still appealing to the consumer.

To the taste, the whole of the inside of the product is filled and any additional filling present, such as cream or the like, retains, as already mentioned, all its consistency and softness. The thin outer layer of puff pastry gives an excellent appearance, offers crispiness and fragrance and, as it is reduced in quantity with regard to the total quantity of the product, does not make it "heavy". Being enclosed by the puff pastry, the leavening dough present as filling retains all its original softness and the additional filling can be added in generous quantities and remains after baking, maintaining all its characteristics.

According to the invention, numerous series of bakery food products can thus be created, in particular single serving products, for example varying the shape of the outer shell, varying the quality of puff pastry, increasing or decreasing the percentage of margarine or butter for lamination, optionally also adding yeast, i.e. as already mentioned using leavening pastries, to obtain a less crispy and softer product, varying the leavening dough and adding practically any edible ingredient, flavourings, colorants, (for example, cocoa, chocolate, raisins, carrots, walnuts, creams, jams, pieces of fruit and the like), obtaining excellent results.

The bakery food product according to the present invention is prepared following the process outline indicated below.
□ Preparation of the laminated dough base (puff or semi-puff pastry, optionally leavened) according to conventional method
□ Preparation of the leavening dough, which will represent at least part of the filling of the product
□ Lamination of the puff pastry to the desired thickness
□ Cutting of the puff pastry in different shapes according to the shape to be given to the finished product, with the addition of optional decorative cut
□ Dosing of the filling (jam, fruit compote, creams) optionally present in addition to the leavening dough
□ Dosing of the leavening dough
□ Folding or laying of the dough to form the final shape of the product
□ Optional surface decoration
□ Optional pre-leavening
□ Baking and packaging or alternatively
□ Freezing and packaging

According to the invention, the laminated dough base is prepared with conventional methods that entail, for example, preparation of the dough, addition of the necessary quantity of margarine or butter, folding of the dough thus obtained and leaving it to rest.

Again according to the invention, a preferred shape of the bakery food product is rectangular, optionally decorated externally with cuts and/or slits. The surface decoration can, for example, be implemented by covering the surface of the product with glazing food products, sugar, grains of different type and dimension.

Again according to the finding, once the preparatory process is finished, the product can be frozen and packaged, to be baked subsequently at the time of consumption, or it can be baked directly and packaged to be consumed immediately.

With regard to the preservation methods, if frozen the product can be kept for at least 12 - 18 months at a temperature of -18°C, while after baking it must be kept at room temperature according to conventional methods and should be consumed within 24 - 36 hours.

With regard to baking, no particular baking system is required, as any equipment currently existing and used for similar products is suitable.

The description above will be more clearly indicated with the aid of the practical embodiments below, provided by way of non limiting examples of the present invention.

### EXAMPLE 1

### Example of product of low weight, produced with a laminated dough base, a leavening dough filling and an additional filling of cream, jam or the like.

| | **min. g** | **% of the shell** | **% of the total** |
|---|---|---|---|
| puff pastry-shell | 30 | 100% | 43% |
| leavening dough | 24 | 80% | 35% |
| filling | 15 | 50% | 22% |
| | **69** | | **100%** |

### EXAMPLE 2

### Example of product of medium weight, produced with a laminated dough base, a leavening dough filling and an additional filling of cream, jam or the like.

| | **medium g.** | **% of the shell** | **% of the total** |
|---|---|---|---|
| puff pastry-shell | 44 | 100% | 51% |
| leavening dough | 22 | 50% | 26% |
| filling | 20 | 45% | 23% |
| | **86** | | **100%** |

### EXAMPLE 3

### Example of product of high weight, produced with a laminated dough base, a leavening dough filling and an additional filling of cream, jam or the like.

| | **max g.** | **% of the shell** | **% of the total** |
|---|---|---|---|
| puff pastry-shell | 60 | 100% | 60% |
| leavening dough | 15 | 25% | 15% |
| filling | 25 | 42% | 25% |
| | **100** | | **100%** |

### EXAMPLE 4

### Example of typical composition of a laminated dough base and a leavening dough used as filling for said dough base

| puff pastry recipe | | | leavening dough recipe 1 | |
|---|---|---|---|---|
| flour 00 | 64.0% | | flour 00 | 20.9% |
| water | 33.4% | | sugar | 18.8% |
| malt | 0.5% | | butter | 18.8% |
| salt | 1.1% | | egg | 30.1% |
| butter | 0.9% | | potato flour | 7.9% |
| | | | leavening agent | 2.1 % |
| | 100% | | emulsifying agent | 0.8% |
| lamination | | | | |
| margarine | 47.1 % | | flavouring | 0.4% |
| | | | | 100.0% |

### EXAMPLE 5

### Example of typical composition of a laminated dough base of the type according to example 4 and of a leavening product used as filling for said dough base

| leavening dough recipe 2 | |
|---|---|
| flour 00 | 45.3% |
| water | 17.2% |
| brewer's yeast | 4.5% |
| margarine | 11.3% |
| egg | 5.7% |
| sugar | 13.6% |
| emulsifying | |
| agent + | 1.8% |
| salt | 0.6% |
| | 100.0% |

### EXAMPLE 6

### Example of description of the rectangular shaped finished product

The product has a rectangular shape with dimensions before baking of 40-45 mm in width by 120 mm in length by 18-22 mm in height. It is composed of a thin layer of puff pastry measuring 130 x 125 x 2 mm in depth, weighing between 44 and 50 g, folded over itself to overlap the edges in the direction of length by 35-50 mm. Inside it contains between 18 and 22 g of a specifically formulated leavening dough and between 15 and 20 g of one or more additional fillings, such as jam, compote or creams, but which can nonetheless be of any type. The product can be decorated externally with cuts or slits and can be covered on the surface with glazing food products and/or grains of various type and dimension.

## Claims

1. Bakery food product comprising a laminated dough base and at least one filling of leavening dough.

2. Bakery food product according to claim 1, **characterized in that** said laminated dough is chosen from puff pastry, semi puff pastry and leavened puff or semi puff pastry (laminated leavened dough).

3. Product according to claims 1 and 2, **characterized in that** it comprises at least one additional filling.

4. Product according to claim 3, **characterized in that** said additional filling is chosen from jam, fruit compote, vanilla cream, chocolate cream, hazelnut cream, fruit cream.

5. Product according to claim 1, **characterized in that** said laminated dough base constitutes between 40% and 90% in weight of the finished unbaked product, and said leavening dough constitutes between 10% and 60% in weight of the finished unbaked product.

6. Product according to claim 5, **characterized in that** said laminated dough base constitutes between 50% and 85% in weight of the finished unbaked product, and said leavening dough constitutes between 15% and 50% in weight of the finished unbaked product

7. Product according to claim 3, **characterized in that** said laminated dough constitutes between 30% and 70% in weight of the finished unbaked product, said filling based on leavening dough constitutes between 10% and 40% in weight of the finished unbaked product and said additional filling constitutes between 5% and 30% in weight of the finished unbaked product.

8. Product according to claim 1, **characterized in that** it is a single serving product.

9. Product according to claim 1, **characterized in that** it is frozen unbaked.

10. Product according to claim 1, **characterized in that** it is baked.

11. Product according to claim 3, **characterized in that** it has the following composition:
| | **Weight % of the total** |
|---|---|
| puff pastry-shell | 43% |
| leavening dough | 35% |
| filling | 22% |
| | **100%** |

12. Product according to claim 3, **characterized in that** it has the following composition:
| | **Weight % of the total** |
|---|---|
| puff pastry-shell | 51 % |
| leavening dough | 26% |
| filling | 23% |
| | **100%** |

13. Product according to claim 3, **characterized in that** it has the following composition:
| | **Weight % of the total** |
|---|---|
| puff pastry-shell | 60% |
| leavening dough | 15% |
| filling | 25% |
| | **100%** |

14. Product according to claim 1, **characterized in that** it has the following composition:
| Laminated dough | | | leavening dough | |
|---|---|---|---|---|
| flour 00 | 64.0% | | flour 00 | 20.9% |
| water | 33.4% | | sugar | 18.8% |
| malt | 0.5% | | butter | 18.8% |
| salt | 1.1% | | egg | 30.1% |
| butter | 0.9% | | potato flour | 7.9% |
| | | | leavening agent | 2.1 % |
| | 100% | | emulsifying agent | 0.8% |
| | | | flavouring | 0.4% |
| | | | | 100.0% |

15. Product according to claim 1, **characterized in that** it has the following composition:
| puff pastry recipe (example) | | | leavening dough recipe 2 | |
|---|---|---|---|---|
| flour 00 | 64.0% | | flour 00 | 45.3% |
| Water | 33.4% | | water | 17.2% |
| Malt | 0.5% | | brewer's yeast | 4.5% |
| Salt | 1.1 % | | margarine | 11.3% |
| Butter | 0.9% | | egg | 5.7% |
| | | | sugar | 13.6% |
| | 100% | | emulsifying agent + | 1.8% |
| lamination | | | | 0.6% |
| margarine | 47.1 % | | salt | |
| | | | | 100.0% |

16. Process for the preparation of a bakery food product according to claims 1 or 3, **characterized in that** it comprises the following steps:
- preparation of said laminated dough
- preparation of said leavening dough
- lamination of said laminated dough to the desired thickness
- cutting of said laminated dough in different shapes according to the shape to be given to the finished product
- optional decorative cut
- dosing of said leavening dough
- folding or laying of said laminated dough to form the final shape of the product
- optional surface decoration
- optional pre-leavening
- baking and packaging or alternatively
- freezing and packaging.

17. Process according to claim 16, **characterized in that** after said optional decorative cutting step a step to dose said additional filling is provided.

18. Process according to claims 16 and 17, **characterized in that** said laminated dough is prepared according to a method that entails preparation of the dough, addition of the necessary quantity of margarine or butter, at least one step to fold the laminated dough thus obtained and leave it to rest.

19. Product according to claim 1, **characterized in that** it has a rectangular shape.

20. Product according to claim 1, **characterized in that** it is decorated on the surface with cuts and/or slits and/or the surface of said product is covered with glazing food products, sugar, grains.

21. Product according to claims 1 or 3, **characterized in that** it has a rectangular shape and dimensions (unbaked) of 40-45 mm in width by 120 mm in length by 18-22 mm in height, the layer of laminated dough is 130 x 125 x 2 mm in depth, weighing between 44 and 50 g, folded over itself to overlap the edges in the direction of length by 35-40 mm, and inside it contains between 18 and 22 g of said leavening dough and between 15 and 20 g of at least one of said additional fillings.
